# EUROPEAN PATENT APPLICATION

(11) **EP 2 421 272 A2**
(43) Date of publication of application: **22.02.2012**
(21) Application number: 11172985.1
(22) Date of filing: 07.07.2011
(51) Int. Cl.: H04N 13/02, H04N 13/00

(54) **Apparatus and method for displaying three-dimensional (3D) object**

(30) Priority: 16.08.2010 KR 20100078703
(71) Applicant: Pantech Co., Ltd., Seoul 121-270 (KR)
(72) Inventor: Lim, Jong U, 121-270 Seoul (KR)
(74) Representative: Herzog, Markus

(57) **Abstract**

Provided are an apparatus and a method for displaying a three-dimensional (3D) object. The apparatus may include a photographing unit to photograph the face of a user from a plurality of directions and to output facial data, a generating unit to generate facial proportion data from the outputted facial data, a storage unit to store the facial proportion data of the user for each photographed direction, and a control unit to determine a line of sight of the user by comparing the stored facial proportion data with photographic data of the user currently taken by the photographing unit and to generate a 3D object having a vanishing point varying depending on the determined line of sight of the user.

## Description

### CROSS-REFERENCE TO RELATED APPLICATION

This application claims priority from and the benefit of Korean Patent Application No. 10-2010-0078703, filed on August 16, 2010, which is hereby incorporated by reference for all purposes as if fully set forth herein.

### BACKGROUND

Field

Exemplary embodiments of the present invention relate to an apparatus and a method for displaying a three-dimensional (3D) object.

Discussion of the Background

A user terminal may display various menus using a three-dimensional (3D) user interface (UI). A typical 3D UI technology may provide a stereoscopic effect using separate images caused by a difference in vision between a left eye and a right eye, however the technology may show the same display even when a line of sight of a user changes. That is, a typical 3D UI technology may show the same UI regardless of a location of a user.

Conventionally, a 3D UI technology using a head tracking scheme may enable a UI to vary depending on a line of sight of a user. However, the technology may have an application range limited to fixed equipment, such as a television. When the 3D UI technology using a head tracking scheme is applied to mobile equipment, such as an apparatus, an additional device may be needed, for example, glasses with an infrared device, resulting in awkward applicability.

### SUMMARY

Exemplary embodiments of the present invention provide an apparatus and a method for displaying a three-dimensional (3D) object, which may provide a stereoscopic effect of a 3D object varying adaptively depending on a line of sight of a user.

Exemplary embodiments of the present invention provide an apparatus and a method for displaying a three-dimensional (3D) object may photograph the face of a user and store facial proportion data, by an apparatus having mobility such as a user terminal. If the apparatus operates in a 3D mode, the apparatus may display a 3D object corresponding to a line of sight of the user using the stored facial proportion data and facial data of the user being photographed. That is, the apparatus may display a 3D stereoscopic object having a vanishing point varying depending on a line of sight of the user.

Exemplary embodiments of the present invention provide an apparatus and a method for displaying a 3D object that may improve a depiction accuracy of a 3D object displayed based on a line of sight of a user using a small number of sensors, resulting in cost reduction and lightweight products.

Exemplary embodiments of the present invention provide an apparatus and a method for displaying a 3D object that may prevent a malfunction of a 3D menu even while operating a vehicle through a stereoscopic feedback of a 3D object based on a line of sight of a user, resulting in a higher accuracy of motion recognition.

Exemplary embodiments of the present invention provide an apparatus and a method for displaying a 3D object that may recognize a change in a vanishing point of a 3D object based on a line of sight, as opposed to a typical head tracking scheme for recognizing a change in a vanishing point based on a distance, so that the 3D object may be displayed using a relatively small amount of calculations.

Additional features of the invention will be set forth in the description which follows, and in part will be apparent from the description, or may be learned by practice of the invention.

An exemplary embodiment of the present invention provides an apparatus to display a 3D object including a photographing unit to photograph the face of a user from a plurality of directions and to output facial data; a generating unit to generate facial proportion data from the outputted facial data; a storage unit to store the facial proportion data of the user for each of the plurality of directions; and a control unit to determine a line of sight of the user by comparing the stored facial proportion data with photographic data of the user currently taken by the photographing unit and to generate a 3D object having a vanishing point varying depending on the determined line of sight of the user.

An exemplary embodiment of the present invention provides an apparatus to display a 3D object including a photographing unit to photograph the face of a user from a plurality of directions and to output facial data; a generating unit to generate facial proportion data from the outputted facial data; a direction sensor to sense a direction used to photograph the face of the user; a storage unit to store the facial proportion data of the user for each sensed direction; and a control unit to determine a line of sight of the user by comparing the stored facial proportion data with photographic data of the user currently taken by the photographing unit and to generate a 3D object having a vanishing point varying depending on the determined line of sight of the user.

An exemplary embodiment of the present invention provides a method for displaying a 3D object in an apparatus including photographing the face of a user from a plurality of directions and outputting facial data; generating facial proportion data from the outputted facial data; storing the facial proportion data of the user for each photographed direction; and determining a line of sight of the user by comparing the stored facial proportion data with photographic data of the user currently photographed, and generating a 3D object having a vanishing point varying depending on the determined line of sight of the user.

An exemplary embodiment of the present invention provides an apparatus to display a three-dimensional (3D) object, the apparatus including a photographing unit to photograph the face of a user from a plurality of directions and to output facial data; a sensing unit to determine a rotation direction of the photographing unit according to each of the plurality of directions; a generating unit to generate facial proportion data from the outputted facial data; a storage unit to store the facial proportion data of the user for each of the plurality of directions according to the rotation direction; and a control unit to determine a line of sight of the user by comparing the stored facial proportion data with photographic data of the user currently taken by the photographing unit and to generate a 3D object having a vanishing point varying depending on the determined line of sight of the user.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating an apparatus according to an exemplary embodiment of the present invention.

FIG. 2 illustrates a method for measuring facial proportion data according to an exemplary embodiment of the present invention.

FIGS. 3A through 3C are views illustrating an example of a relative angle.

FIGS. 4A and 4B are views illustrating an example of a 3D object having a vanishing point varying depending on a relative angle.

FIG. 5 is a block diagram illustrating an apparatus according to an exemplary embodiment of the present invention.

FIG. 6 is a block diagram illustrating an apparatus according to an exemplary embodiment of the present invention.

FIG. 7 is a flowchart illustrating a method for displaying a 3D object in an apparatus according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

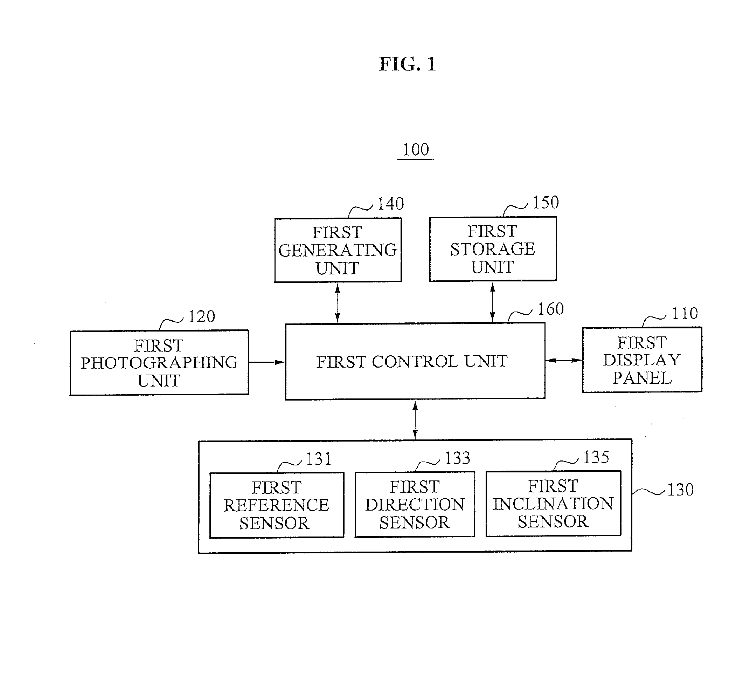

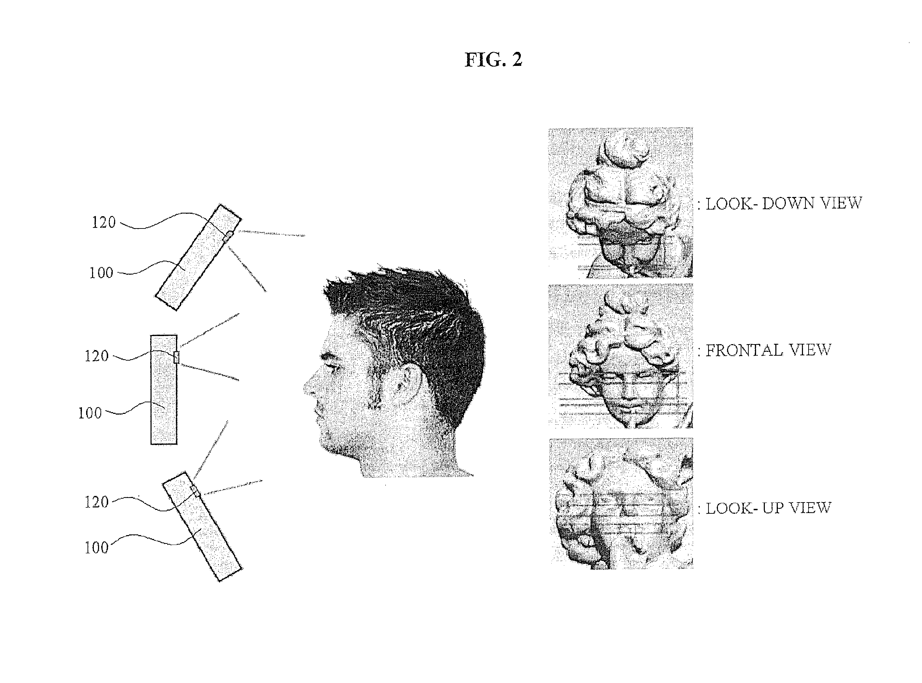

FIG. 1 is a block diagram illustrating an apparatus 100 according to an exemplary embodiment of the present invention. FIG. 2 illustrates a method for measuring facial proportion data according to an exemplary embodiment of the present invention.

The apparatus 100 may display an object enabled to interact with a user in three dimensions. The apparatus 100 may be one of all kinds of electronic appliances, for example, a smartphone, a mobile phone, a display device, a personal computer, a laptop computer, a tablet computer, and the like.

Referring to FIG. 1, the apparatus 100 may include a first display panel 110, a first photographing unit 120, a first sensing unit 130, a first generating unit 140, a first storage unit 150, and a first control unit 160.

The first display panel 110 may display a two-dimensional (2D) object or a 3D object under control of the control unit 160, and may display various images stored in the apparatus 100. Here, the object may refer to all images displayed on the first display panel 110 and may include a graphical user interface (GUI) for displaying menus. The 3D object may be a stereoscopic object, and the 2D object may be a flat object.

The first display panel 110 may display an image of the face of a user taken by the first photographing unit 120. Also, the first display panel 110 may display a 3D object having a display type varying depending on a line of sight of the user and a relative angle of the apparatus 100. For example, if the user looks at the apparatus 100 from the right side of the apparatus 100, the first display panel 110 may display a 3D object having a changed inclination and a changed display type.

The first photographing unit 120 may photograph or monitor an image of a subject, and may be an embedded camera. To generate facial proportion data of a user, the user may photograph the face of the user using the first photograph unit 120. The first photograph unit 120 may photograph the face of the user in various directions by movement of the apparatus 100 by the user or by movement by the user of the user's face, and may output facial data of the face.

The facial proportion data may represent proportion data in facial features of the user, such as eyes, a nose, a mouth, and the like, viewed by the apparatus 100. For example, facial proportion data measured by the first photographing unit 120 looking down on the face of the user may be different from facial proportion data measured by the first photographing unit 120 looking straight at the face of the user, as shown in FIG. 2.

FIG. 2 illustrates a method for measuring facial proportion data according to an exemplary embodiment of the present invention. Referring to FIG. 2, while the user looks straight ahead, motionless, the user may photograph the face of the user in a frontal direction using the first photographing unit 120. Also, the user may further photograph the face of the user while moving the apparatus 100 in left, right, upward, and downward directions, and combinations thereof, relative to the front as an origin. Here, the face of the user may continue looking straight ahead. Accordingly, the first photographing unit 110 may output photographic data of the face of the user, viewed from left, right, upward, and downward directions, and combinations thereof, respectively. The movement of the apparatus 100 and the rotation of the apparatus 100 may be used herein for the same meaning.

Referring to FIG. 2, a 'look-down' view may be a shot taken when the apparatus 100 looks down on the face of the user, a 'look-up' view may be a shot taken when the apparatus 100 looks up the face of the user, and a 'frontal' view may be a shot taken when the apparatus 100 looks straight at the face of the user. Although FIG. 2 shows the apparatus 100 moving with respect to the face of the user, aspects are not limited thereto such that the user may move her face with respect to the apparatus 100, i.e., the user may hold the apparatus 100 in place and look down so as to provide facial proportion data for the look-down view.

To generate facial proportion data, the sensing unit 130 may sense a rotation direction and a rotation rate of the first photographing unit 120 or the apparatus 100, while the first photographing unit 120 photographs the face of the user. To sense a rotation direction and a rotation rate, the first sensing unit 130 may include a first reference sensor 131, a first direction sensor 133, and a first inclination sensor 135.

The first reference sensor 131 may set an x- and/or a y-axis reference coordinate system, and may use a digital compass. The reference coordinate system may be used as an origin to sense a rotation direction and an inclination of the apparatus 100, or to recognize a change in a line of sight of the user.

The first direction sensor 133 may sense a rotation direction of the first photographing unit 120 or the apparatus 100, and may use an accelerator sensor or an accelerometer. The rotation direction may be a movement direction of the apparatus 100 by the user. For example, the rotation direction may be a left, right, upward, or downward direction, or combinations thereof, relative to the frontal face of the user.

The first inclination sensor 135 may sense an inclination of the first photographing unit 120 or the apparatus 100, and may use a gyroscope. Hereinafter, description is made assuming that the first photographing unit 120 captures an image facing the first display panel 110 as an example. If the first display panel 110 of the apparatus 100 is opposite to the face of the user, the first inclination sensor 135 may sense an inclination as 0°. If the first display panel 110 of the apparatus 100 is opposite to the face of the user and the first photographing unit 120 inclines in a right direction, the inclination may change.

The generating unit 140 may generate facial proportion data of the user using facial data outputted from the first photographing unit 120. The generating unit 140 may generate facial proportion data using distances between eyes, a nose, and a mouth among facial features of the user.

The generating unit 140 may set, as reference data, facial proportion data of the face of the user taken from a frontal direction, and may generate facial proportion data based on the reference data using facial data of the face of the user taken from another direction. For example, if the generating unit 140 sets reference data according to a distance between an eye and a nose, a distance between the nose and a mouth is 2:1 in a frontal view, a facial proportion may be 1:1 in a look-down view. In this instance, the facial proportion in the look-down view may be calculated based on the reference data.

The first storage unit 150 may store facial proportion data of the user generated by the first generating unit 140 for each inclination or each rotation angle. The inclination may be an inclination of the apparatus 100, and the rotation angle may be an angle between the apparatus 100 and the face of the user. The rotation angle may vary depending on a rotation direction of the apparatus 100 or of the user's face. The rotation angle may be calculated based on a position of the apparatus 100 in which the apparatus 100 looks straight at the face of the user. That is, if the apparatus 100 photographs the user while the apparatus 100 looks straight at the face of the user, the rotation angle may be 0°, which may be used as a reference angle. Accordingly, the rotation angle may include data about an angle between the apparatus 100 and a line of sight of the user and data about a direction of the apparatus 100 toward the user.

The following Table 1 shows an example of facial proportion data measured according to FIG. 2 and stored for each rotation angle.

**Table 1**

| User 1 | | Facial proportion data | | |
|---|---|---|---|---|
| | | Look-Down View | Frontal View | Look-Up View |
| Angle of rotation | 10° | Facial proportion data 1 | Facial proportion data 4 | Facial proportion data 7 |
| | 0° | Facial proportion data 2 | Facial proportion data 5 | Facial proportion data 8 |
| | -10° | Facial proportion data 3 | Facial proportion data 6 | Facial proportion data 9 |

With regard to Table 1, assuming a rotation angle is 0° if the apparatus 100 is opposite to a user looking straight ahead, a rotation angle of 10° may be an angle calculated if the apparatus 100 is moved at an angle of 10° in a right direction. A rotation angle of -10° may be an angle calculated if the user looks straight ahead and the apparatus 100 is moved at an angle of 10° in a left direction.

The following Table 2 shows an example of facial proportion data measured according to the method of FIG. 2 and stored for inclinations of 0°, 30°, and -30° and rotation angles of 0°, 10°, and -10°.

**Table 2**

| User 1 | | Inclination (-180° ~ +180°) | | |
|---|---|---|---|---|
| | | 0° | 30° | -30° |
| Angle of rotation | 10° | Facial proportion data 11 | Facial proportion data 14 | Facial proportion data 17 |
| | 0° | Facial proportion data 12 | Facial proportion data 15 | Facial proportion data 18 |
| | -10° | Facial proportion data 13 | Facial proportion data 16 | Facial proportion data 19 |

With regard to Table 2, an inclination of 0° may be an inclination of the apparatus 100 if the first display panel 110 of the apparatus 100 is opposite to a user. An inclination of 30° may be an inclination of the apparatus 100 when the first display panel 110 of the apparatus 100 is opposite to a user and the first display panel 110 inclines at an angle of 30° in a right direction.

The first control unit 160 may calculate a rotation direction and an inclination of the apparatus 100 by analyzing sensing data outputted from the first reference sensor 131, the first direction sensor 133, and the first inclination sensor 135.

Also, the first control unit 160 may map the generated facial proportion data to at least one of the calculated rotation directions and the calculated inclinations, and may store the mapping data in the first storage unit 150. In the case of a plurality of users, the first control unit 160 may map the facial proportion data and store the mapping data in the first storage unit 150 for each user.

Hereinafter, operation of the apparatus 100 in a 3D mode for displaying a 3D object after generation and storage of facial proportion data of a user is described.

If the apparatus 100 operates in a 3D mode, the first photographing unit 120 may continuously photograph the face of the user and output photographic data. The first photographing unit 120 may have a wide viewing angle or field of view or angular field of view to photograph the face of the user. The first photographing unit 120 may determine a line of sight of the user based on the photographic data outputted from the first photographing unit 120 and may generate a 3D object having a vanishing point varying depending on the determined line of sight of the user.

Specifically, while the first photographing unit 120 is photographing the user, the first control unit 160 may control the first sensing unit 130 to sense a rotation direction and an inclination of the apparatus 100. The first control unit may detect facial data of the user from the photographic data outputted from the first photographing unit 120, and recognize a change in the line of sight of the user by analysis of the detected facial data. The first control unit 160 may select facial proportion data identical or sufficiently similar to the facial data in the first storage unit 150.

The first control unit 160 may calculate a rotation angle corresponding to the detected facial proportion data, and may determine that there is a change in the line of sight of the user if the calculated rotation angle is greater than or less than 0°. Also, the first control unit 160 may determine the calculated rotation angle as a direction of the line of sight of the user or an angle of the line of sight of the user.

Also, the first control unit 160 may calculate a rotation direction and an inclination of the apparatus 100 using sensing data outputted from the first direction sensor 133 and the first inclination sensor 135.

The first control unit 160 may generate a 3D object having a changed vanishing point by comparing the determined direction of the line of sight of the user with the calculated rotation direction of the apparatus 100 and the calculated inclination of the apparatus 100. The first control unit 160 may calculate a relative angle of the apparatus 100 to the line of sight of the user by comparing the determined direction of the line of sight of the user with the calculated rotation direction of the apparatus 100 and the calculated inclination of the apparatus 100.

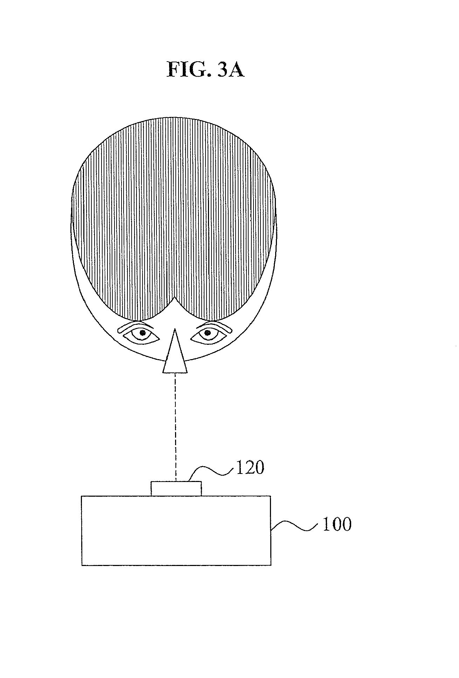

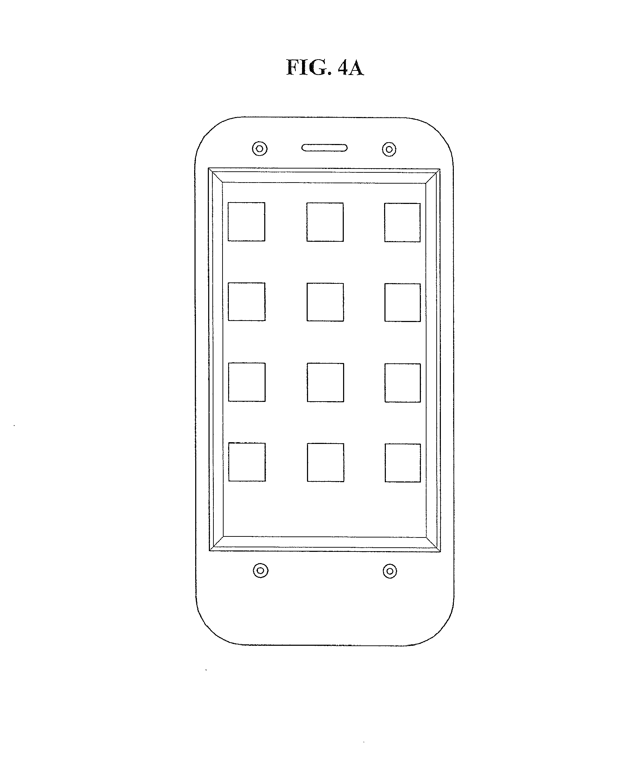

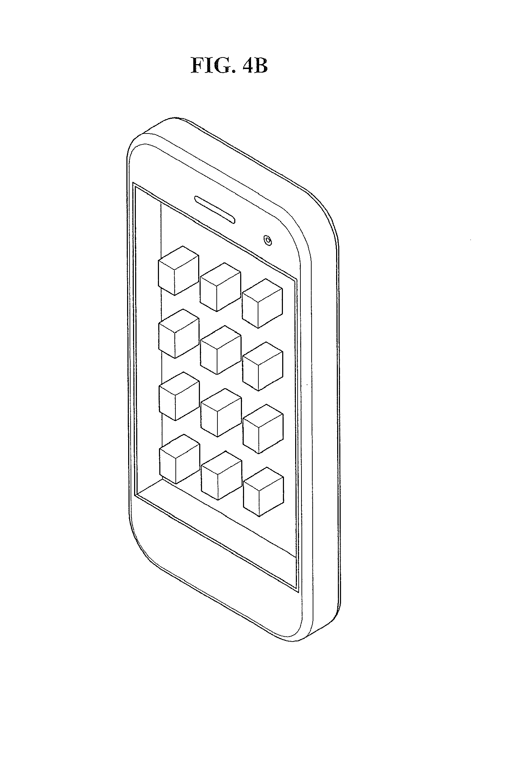

FIGS. 3A through 3C are views illustrating an example of a relative angle according to exemplary embodiments of the present invention. FIGS. 4A and 4B are views illustrating an example of a 3D object having a vanishing point varying depending on a relative angle according to exemplary embodiments of the present invention.

Referring to FIG. 3A, assuming an inclination angle of 0°, if a line of sight of a user is directed toward the front, i.e., there is no change in a line of sight of the user and the apparatus 100 is opposite to the line of sight of the user, a relative angle is 0°. The first control unit 160 may generate a 3D object corresponding to the relative angle of 0°, i.e., a 3D object directed toward the front. Accordingly, the user may see a 3D object displayed toward the front as shown in FIG. 4A.

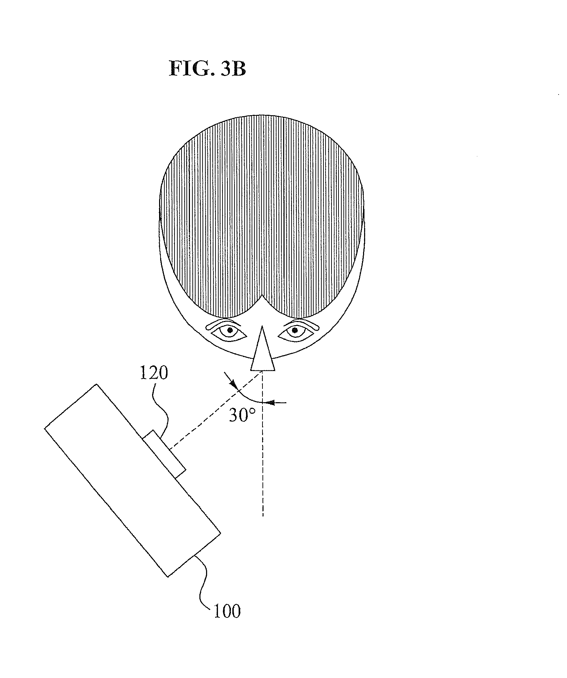

Referring to FIG. 3B, assuming an inclination angle of 0°, if a line of sight of a user is directed toward the front and the apparatus 100 is moved at an angle of 30° in a right direction, a relative angle is 30°. The first control unit 160 may generate a 3D object corresponding to the relative angle of 30°. Accordingly, the user may see a left face of the 3D object more clearly. The rotation of the apparatus 100 at an angle of 30° in a right direction may be recognized from sensing data of the first direction sensor 133 and the first inclination sensor 135.

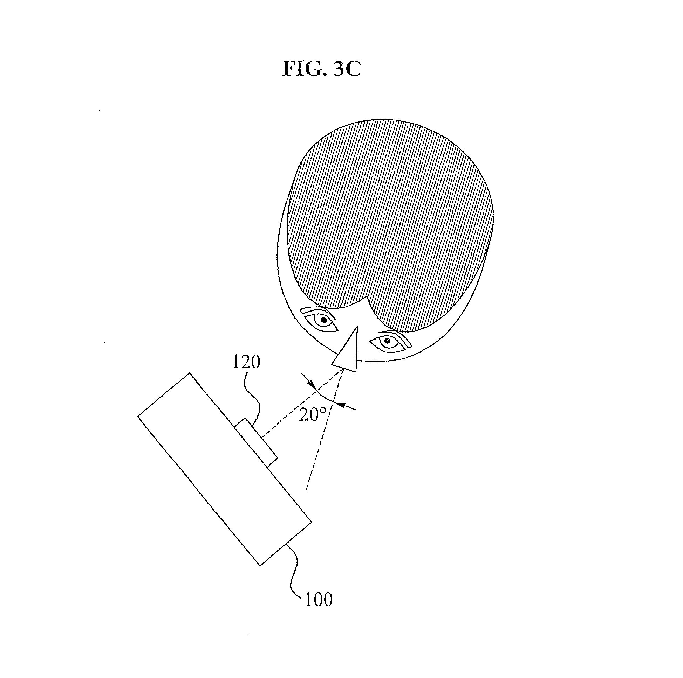

Referring to FIG. 3C, if a line of sight of a user is sensed as being moved at an angle of 10° in a right direction and the apparatus 100 is moved at an angle of 30° in a right direction, a relative angle is 20°. Accordingly, the first control unit 160 may generate a 3D object corresponding to the relative angle of 20°.

If a line of sight of a user is directed toward the front and the apparatus 100 is moved at an angle of 30° in a left direction, a relative angle is -30°. Further, the apparatus 100 may be inclined at an inclination angle of 10° so as to show a top side of the 3D object. The first control unit 160 may generate a 3D object corresponding to the relative angle of -30° and inclination angle of 10°. Accordingly, the user may see the 3D object having a vanishing point as shown in FIG. 4B, which is different from a vanishing point of FIG. 4A.

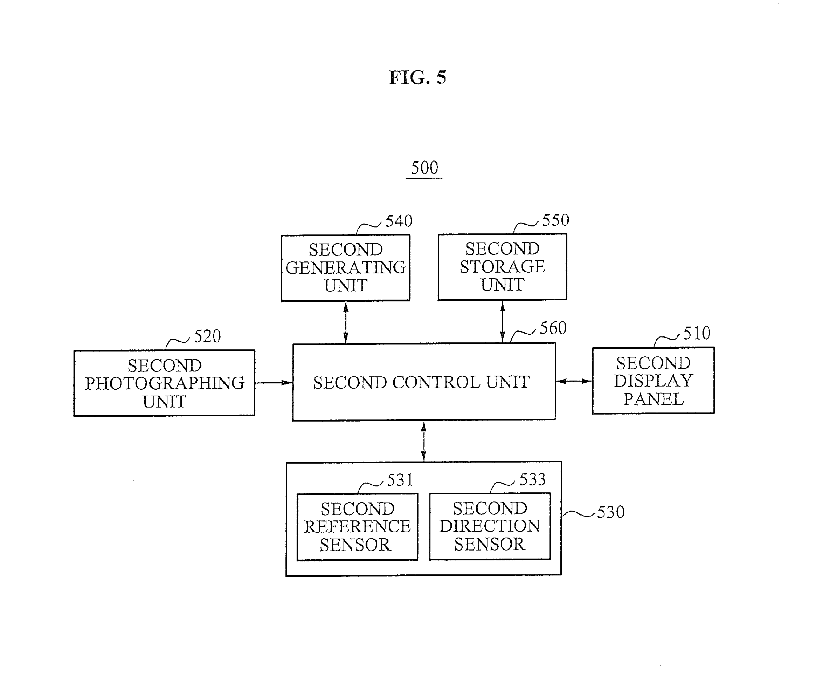

FIG. 5 is a block diagram illustrating an apparatus 500 according to an exemplary embodiment of the present invention.

Referring to FIG. 5, the apparatus 500 may include a second display panel 510, a second photographing unit 520, a second sensing unit 530, a second generating unit 540, a second storage unit 550, and a second control unit 560. The second display panel 510, the second photographing unit 520, the second generating unit 540, the second storage unit 550, and the second control unit 560 of the apparatus 500 may be similar to the first display panel 110, the first photographing unit 120, the first generating unit 140, the first storage unit 150, and the first control unit 160 of the apparatus 100 of FIG. 1, and thus, detailed description thereof is omitted herein.

However, the second sensing unit 530 of the apparatus 500 may include a second reference sensor 531 and a second direction sensor 533. That is, if the apparatus 500 generates facial proportion data of a user and if the apparatus 500 operates in a 3D mode, the apparatus 500 may calculate at least one of a rotation direction and an inclination of the apparatus 500 without using an inclination sensor.

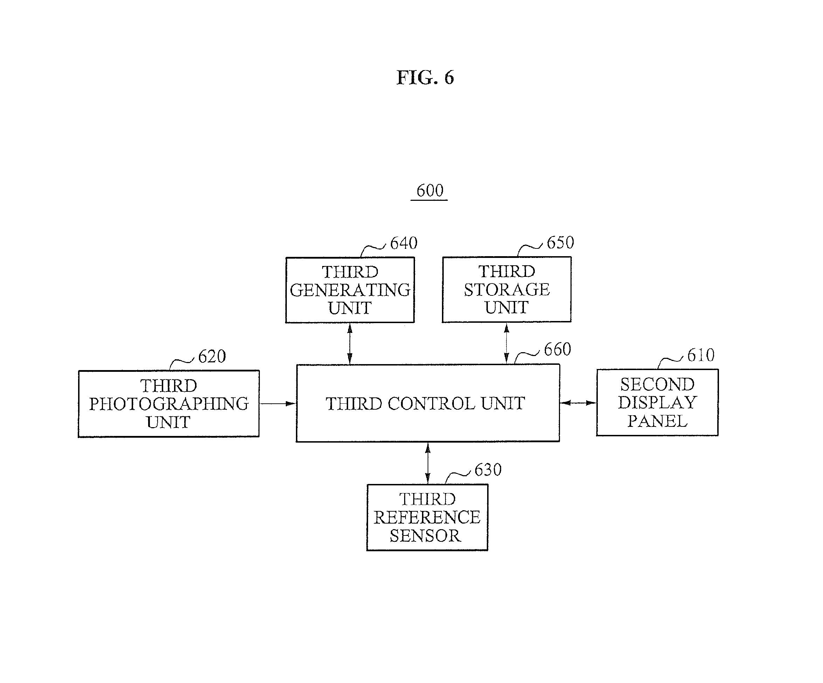

FIG. 6 is a block diagram illustrating an apparatus 600 according to an exemplary embodiment of the present invention.

Referring to FIG. 6, the apparatus 600 may include a third display panel 610, a third photographing unit 620, a third reference sensor 630, a third generating unit 640, a third storage unit 650, and a third control unit 660. The third display panel 610, the third photographing unit 620, the third generating unit 640, the third storage unit 650, and the third control unit 660 of the apparatus 600 may be similar to the first display panel 110, the first photographing unit 120, the first generating unit 140, the first storage unit 150, and the first control unit 160 of the apparatus 100 of FIG. 1, and thus, detailed description thereof is omitted herein.

However, the apparatus 600 may include solely the third reference sensor 630. That is, if the apparatus 600 generates facial proportion data of a user and if the apparatus 600 operates in a 3D mode, the apparatus 600 may calculate a rotation direction of the apparatus 600 using the third reference sensor 630 such as a digital compass.

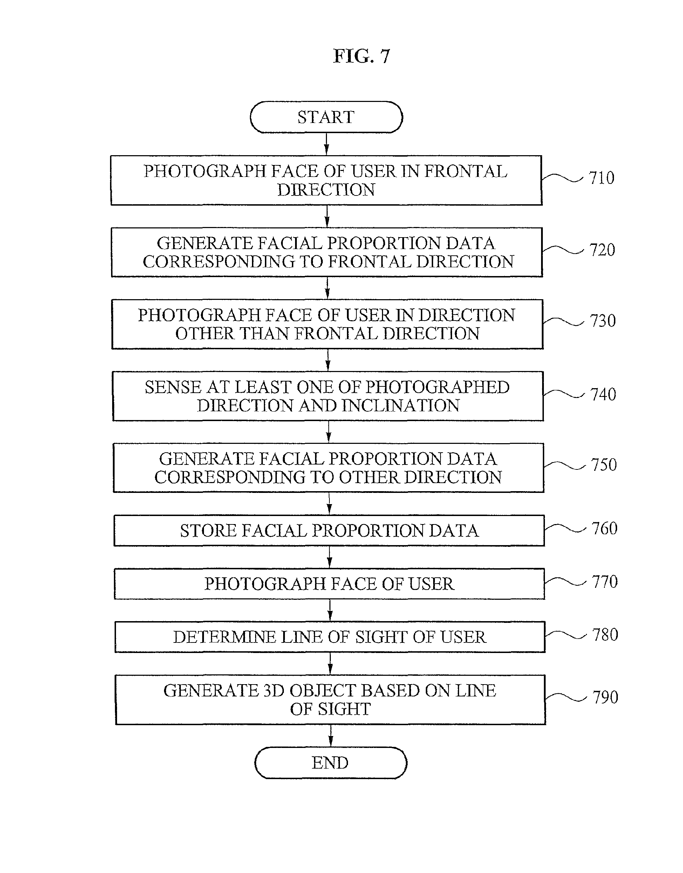

FIG. 7 is a flowchart illustrating a method for displaying a 3D object in an apparatus according to an exemplary embodiment of the present invention.

In operation 710, the apparatus may photograph the face of a user from a frontal direction using a camera to capture the frontal view, and may output facial data. That is, the apparatus may photograph a frontal view of the face of the user using a camera while the user looks straight ahead motionless.

In operation 720, the apparatus may generate facial proportion data corresponding to the frontal direction using the outputted facial data.

In operation 730, the apparatus may photograph the face of the user in a direction other than the frontal direction, and may output facial data. That is, the user may photograph the face of the user while moving the apparatus in left, right, upward, and downward directions, and combinations thereof, relative to the frontal direction. However, aspects are not limited thereto such that the user may photograph the face of the user while moving the user's face in left, right, upward, and downward directions, and combinations thereof, relative the apparatus.

In operation 740, the apparatus may sense at least one of a rotation direction, a rotation rate, and an inclination of the camera or the apparatus if the apparatus photographs the face of the user in operation 730.

In operation 750, the apparatus may generate facial proportion data corresponding to another direction using the facial data outputted in operation 730.

In operation 760, the apparatus may store the facial proportion data generated in operation 750. The apparatus may map the facial proportion data to at least one of the rotation direction and the inclination of the apparatus, and may store the mapping data.

In operation 770, the apparatus may photograph the face of the user using the camera in response to a request of the user or may automatically photograph the face of the user, and may output photographic data of the user.

In operation 780, the apparatus may determine a line of sight of the user by comparing the facial proportion data stored in operation 760 with the photographic data of the user outputted in operation 770.

In operation 790, the apparatus may generate and display a 3D object having a changed vanishing point based on the determined line of sight of the user.

Aspects of the present invention may be also applied to a 3D object display technology using a head tracking scheme. When an apparatus has at least two cameras, a change in a line of sight or a point of sight of a user may be recognized.

Although the embodiments of the present invention show that movement of an apparatus based on rotation in an x direction and a y direction is sensed, the present invention may generate a 3D object by sensing movement of an apparatus based on a wheel-like rotation, a shaking operation, and the like.

The exemplary embodiments according to the present invention may be recorded in non-transitory computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of non-transitory computer-readable media include magnetic media, such as hard disks, floppy disks, and magnetic tape; optical media, such as CD ROM disks, and DVD; magneto-optical media, such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
Provided are an apparatus and a method for displaying a three-dimensional (3D) object. The apparatus may include a photographing unit to photograph the face of a user from a plurality of directions and to output facial data, a generating unit to generate facial proportion data from the outputted facial data, a storage unit to store the facial proportion data of the user for each photographed direction, and a control unit to determine a line of sight of the user by comparing the stored facial proportion data with photographic data of the user currently taken by the photographing unit and to generate a 3D object having a vanishing point varying depending on the determined line of sight of the user.

## Claims

1. An apparatus to display a three-dimensional (3D) object, the apparatus comprising:
a photographing unit adapted to photograph the face of a user from a plurality of directions and to output facial data;
a generating unit adapted to generate facial proportion data from the outputted facial data;
a storage unit adapted to store the facial proportion data of the user for each of the plurality of directions; and
a control unit adapted to determine a line of sight of the user by comparing the stored facial proportion data with photographic data of the user currently taken by the photographing unit and to generate a 3D object having a vanishing point varying depending on the determined line of sight of the user.

2. The apparatus of claim 1, further comprising:
a sensing unit including a direction sensor to sense a direction used to photograph the face of the user as one of the plurality of directions.

3. The apparatus of claim 2, wherein the direction sensor is adapted to sense a rotation direction of the photographing unit while photographing the face of the user.

4. The apparatus of any of claims 1 to 3, wherein the sensing unit further comprises:
an inclination sensor to sense an inclination of the photographing unit while photographing the face of the user.

5. The apparatus of claim 4, wherein the storage unit is adapted to store the facial proportion data of the user for each of the plurality of directions according to the rotation direction and the inclination.

6. The apparatus of any of claims 2 to 5, wherein sensing unit comprises a digital compass.

7. The apparatus of any of claims 2 to 6, wherein sensing unit comprises an accelerometer.

8. The apparatus of any of claims 2 to 7, wherein sensing unit comprises a gyroscope.

9. The apparatus of any of claims 1 to 8, wherein the control unit is adapted to map the facial proportion data to at least one of a rotation direction and an inclination of the photographing unit, and to store the mapping data in the storage unit.

10. The apparatus of any of claims 1 to 9, wherein the control unit is adapted to control the generating unit and the storage unit to generate and store facial proportion data of a plurality of users for each user.

11. The apparatus of any of claims 1 to 10, wherein the generating unit is adapted to generate facial proportion data using proportion data between at least one of eyes, a nose, and a mouth in the face of the user.

12. The apparatus of any of claims 1 to 11, wherein the generating unit is adapted to set, as reference data, the facial proportion data of the face of the user taken from a frontal direction, and to determine a direction used for the photographing unit to currently photograph the face of the user based on the reference data.

13. A method for displaying a 3D in an apparatus, the method comprising:
photographing the face of a user from a plurality of directions and outputting facial data;
generating facial proportion data from the outputted facial data;
storing the facial proportion data of the user for each photographed direction; and
determining a line of sight of the user by comparing the stored facial proportion data with photographic data of the user currently photographed, and generating a 3D object having a vanishing point varying depending on the determined line of sight of the user.

14. The method of claim 13, further comprising:
sensing the different directions used to photograph the face of the user.

15. The method of claim 13 or 14, wherein the generating comprises generating facial proportion data using proportion data between eyes, a nose and a mouth in the face of the user.
